(19) Europäisches Patentamt
European Patent Office
Office européen des brevets

(11) **EP 3 827 935 B1**

(12) **EUROPEAN PATENT SPECIFICATION**

(45) Date of publication and mention
of the grant of the patent:
**17.07.2024   Bulletin 2024/29**

(21) Application number: **20207762.4**

(22) Date of filing: **16.11.2020**

(51) International Patent Classification (IPC):
***B25J 9/16*** *(2006.01)*

(52) Cooperative Patent Classification (CPC):
**B25J 9/1671; G05B 2219/40311; G05B 2219/40317**

(54) **SIMULATED ROBOT TRAJECTORY**

SIMULIERTE ROBOTERBAHN

TRAJECTOIRE DE ROBOT SIMULÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.11.2019   JP 2019214769**

(43) Date of publication of application:
**02.06.2021   Bulletin 2021/22**

(73) Proprietor: **Kabushiki Kaisha Yaskawa Denki
Kitakyushu-shi, Fukuoka 806-0004 (JP)**

(72) Inventor: **WATANABE, Wataru
Kitakyushu-Shi, Fukuoka 806-0004 (JP)**

(74) Representative: **Grünecker Patent- und
Rechtsanwälte
PartG mbB
Leopoldstraße 4
80802 München (DE)**

(56) References cited:
**CN-A- 111 515 953        JP-A- 2018 069 428
JP-A- 2019 171 501        US-A1- 2013 116 822
US-A1- 2016 039 090        US-A1- 2017 120 447
US-A1- 2019 240 833**

## Description

## BACKGROUND

Field

The present invention relates to a simulation system, a simulation method, a simulation program, and a robot system.

Description of the Related Art

WO 2018/143003 describes a robot path generation device that generates a robot path between a start point and an end point that are arbitrarily set, based on a result of a machine learning process based on a data set.

Document US20170120447 discloses a robot programming device capable of easily checking interference between a robot and peripheral equipment, by which the interference can be easily avoided automatically or manually. The programming device has: a simulation executing part which executes a simulation of motions of peripheral equipment and a robot hand based on a control signal; a signal setting part which sets the control signal for executing the simulation, with respect to a teaching point or a trajectory between the teaching points included in a predetermined robot operation program or a program template, the control signal being set as attribute data of each teaching point or each trajectory; a moving part which moves the robot to the teaching point or the trajectory; and a display setting part which determines as to whether the workpiece is displayed or hidden, with respect to the teaching point or the trajectory to which the robot is moved.

Document JP2019171501 discloses a robot interference determination device, which comprises: a first display control unit that makes a display device display an element work list, a list of information related to a plurality of element work of a robot to a workpiece to be worked by the robot, in a display mode in which an operator can identify contents of each element work; a memorizing unit that memorizes three-dimensional data on the robot, the workpiece and a circumferentially-arranged matter arranged in the circumference of the robot; a second display control unit that arranges the three-dimensional data on the robot, the work-piece and the circumferentially-arranged matter in a virtual space, and makes the display device display the data; and an interference determination unit that determines whether or not interference of the three-dimensional data on the robot, the work-piece and the circumferentially-arranged matter is caused in the virtual space, during movement of the robot between the selected two element works, on the basis of operation input by the operator who selects at least two element work included in the element work.

## SUMMARY

Further automation is desired in robot control planning.

This is achieved by the features of the independent claims.

## BRIEF DESCRIPTION OF THE DRAWINGS

FIG. 1 is a diagram showing an example of the configuration of a robot system.
FIG. 2 is a diagram showing an example of a hardware configuration of a programming assistance device.
FIG. 3 is a diagram showing an example of a functional configuration of a programming assistance device.
FIG. 4 is a flowchart showing an example of the operation of the programming assistance device.
FIG. 5 is a diagram showing an example of adjusting a position of a teaching point.
FIG. 6 is a diagram showing an example of the relationship between a teaching point and a trajectory of a robot.
FIG. 7 is a flowchart showing an example of the operation of the programming assistance device.
FIG. 8 is a diagram showing an example of a series of processes represented by an operation program.
FIG. 9 is a flowchart showing an example of the operation of the programming assistance device.

## DETAILED DESCRIPTION

Hereinafter, examples of the present disclosure will be described in detail with reference to the accompanying drawings. In the description of the drawings, the same or equivalent element is denoted by the same reference numeral, and redundant description is omitted.

[Robot system]

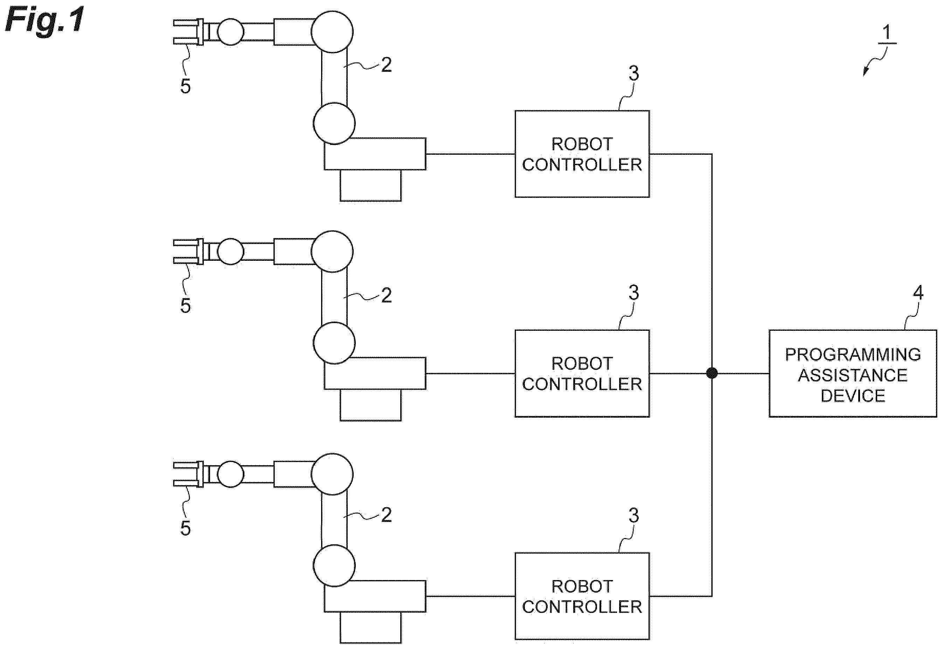

The simulation system according to the present disclosure is applied to a programming assistance device 4 of a robot system 1. The robot system 1 is a system for automating various operations such as machining and assembly by causing a robot to execute an operation taught by an operator. FIG. 1 is a diagram illustrating an example of a configuration of a robot system. In one example, the robot system 1 includes one or more robots 2, one or more robot controllers 3 corresponding to the one or more robots 2, and a programming assistance device 4. FIG. 1 shows three robots 2 and three robot controllers 3, and further shows a configuration in which one robot 2 is connected to one robot controller 3. However, neither the number of devices nor the connection method is limited to the example shown in FIG. 1. For example, a plurality of robots 2 may be connected to one robot controller 3.

In one example, the robot 2 is a vertically articulated robot of multi-axis serial link type, and is configured to be able to execute various processes while holding a tool at a tip portion 5 thereof. The robot 2 can freely change the position and posture of the tip portion 5 within a predetermined range. The robot 2 may be a 6-axis vertically articulated robot or a 7-axis vertically articulated robot in which one redundant axis is added to 6 axes. In one example, the plurality of robots 2 are arranged such that any of the robots 2 can execute the same processing on the same workpiece arranged at the same position.

The robot controller 3 is a device for controlling the robot 2 in accordance with a previously generated operation program. In one example, the operation program includes data for controlling the robot 2, and includes, for example, a path indicating a trajectory of the robot 2. The trajectory of the robot 2 refers to a path of movement of the robot 2 or its component. For example, the trajectory of the robot 2 may be the trajectory of the tip portion 5. In one example, the robot controller 3 calculates a target joint angle value (an target angle value of each joint of the robot 2) for matching the position and posture of the tip portion 5 with the target value indicated by the operation program, and controls the robot 2 according to the target angle value.

The robot controller 3 controls the robot 2 to execute a series of processes. The process of the minimum unit constituting the series of processes is called a task. Examples of the task include "take a component", "place a component", "fit a component (to a workpiece)", "take a standby posture", and the like, but the task may be set according to any policy. One task may include a work path that is a trajectory of the robot 2 in the task. In one example, the work path is set based on a user input when the task is generated. That is, the work path is set manually. The work path is an example of a first path.

The operation program also includes a path indicating a trajectory of the robot 2 connecting tasks. In some examples, this path connects the end point of the work path in a preceding task and the start point of the work path in a subsequent task. In the present disclosure, a path between tasks is also referred to as an "air-cut path" to be distinguished from a work path. The path between tasks is automatically set, and is set by, for example, setting a teaching point other than the start point and the end point. Here, the teaching point refers to a reference point set to define a path. The air-cut path is an example of a second path.

The programming assistance device 4 is a device that assists generation of an operation program. The programming assistance device 4 generates an operation program for each of the one or more robots 2 and simulates whether there is a problem in control based on the operation program. The simulation refers to a process of virtually executing the operation program, and specifically, refers to a process of executing the operation program on a computer in a simulated manner without actually operating the robot 2. In some examples, the simulation is a process of virtually executing an operation program on a virtual space in which the robot 2 and another object are arranged. The other object is an object arranged around the robot 2, and may be, for example, another robot 2, a workpiece, another manufacturing apparatus, or the like.

[Programming assistance device]

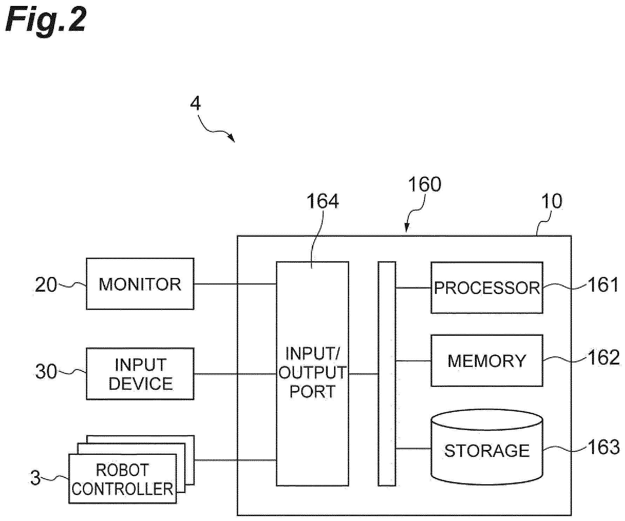

Fig. 2 is a diagram illustrating an example of a hardware configuration of the programming assistance device 4. The programming assistance device 4 includes a body 10, a monitor 20, and an input device 30.

The body 10 includes at least one computer. The body 10 includes circuitry 160, and the circuitry 160 includes at least one processor 161, a memory 162, a storage 163, and an input/output port 164. The storage 163 stores a program for configuring each functional module of the body 10. The storage 163 is a computer-readable recording medium such as a hard disk, a nonvolatile semiconductor memory, a magnetic disk, or an optical disk. The memory 162 temporarily stores a program loaded from the storage 163, an operation result of the processor 161, and the like. The processor 161 executes a program in cooperation with the memory 162 to configure each functional module. The input/output port 164 inputs and outputs an electrical signal among the monitor 20, the input device 30, and the robot controller 3 in response to an instruction from the processor 161.

The monitor 20 is a device for displaying information output from the body 10. The monitor 20 may be of any type as long as it can display graphics, and a specific example thereof is a liquid crystal panel. The input device 30 is a device for inputting information to the body 10. The input device 30 may be any device as long as desired information can be input, and specific examples thereof include a keypad and a mouse.

The monitor 20 and the input device 30 may be integrated as a touch panel. For example, like a tablet computer, the body 10, the monitor 20, and the input device 30 may be integrated.

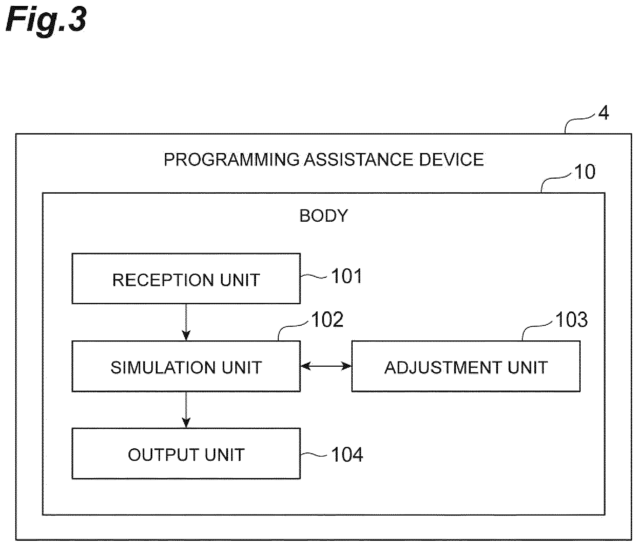

FIG. 3 is a diagram showing an example of a functional configuration of the programming assistance device 4. In one example, the programming assistance device 4 includes a reception unit 101, a simulation unit 102, an adjustment unit 103, and an output unit 104 as functional modules. The reception unit 101 is a functional module for acquiring an operation program to be verified. The simulation unit 102 is a functional module that virtually executes the operation program and checks whether there is a problem in the operation program. More specifically, the simulation unit 102 determines whether the robot 2 interferes with another object in the simulation. In other words, the simulation unit 102 checks whether there is an interference between the robot 2 and another object based on an execution result of the operation program. In the present disclosure, interference refers to contact or collision between objects, and in some examples, refers to contact or collision of the robot 2 with another object. The adjustment unit 103 is a functional module that adjusts a parameter related to at least one teaching point corresponding to a path in response to interference occurring in a simulation (in other words, in response to detecting the interference). The output unit 104 is a functional module that outputs a simulation result.

[Simulation method]

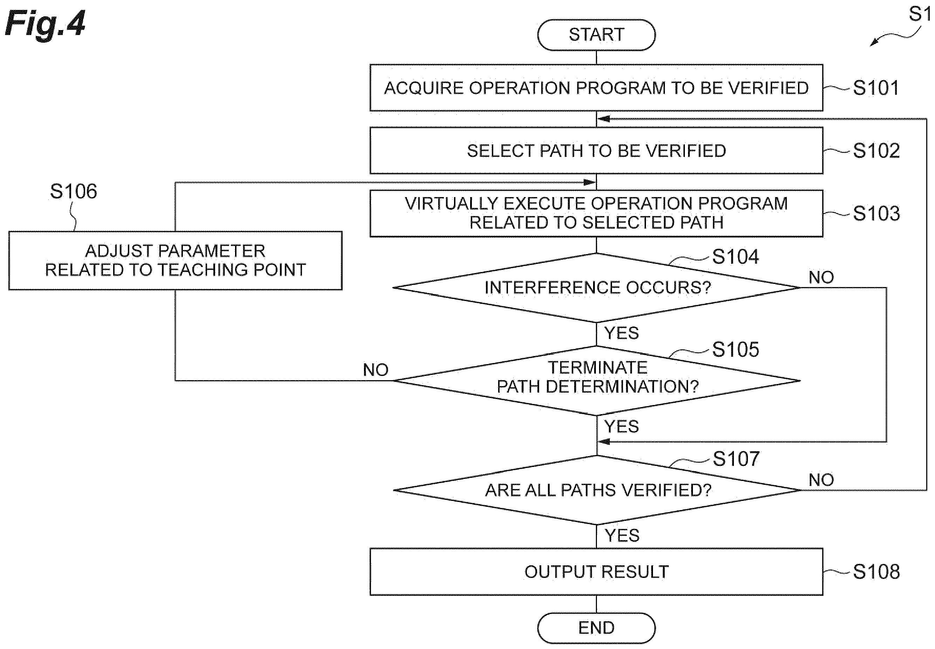

As an example of a simulation method according to the present disclosure, an example of a series of processing procedures executed by the programming assistance device 4 will be described with reference to FIG. 4. FIG. 4 is a flowchart showing an example of the operation of the programming assistance device 4 as a processing flow S1. That is, the programming assistance device 4 executes the processing flow S1.

In step S101, the reception unit 101 acquires the operation program to be verified. For example, the reception unit 101 may receive an operation program input by a user, read an operation program from a given storage device based on a user input, or receive an operation program transmitted from another computer.

In step S102, the simulation unit 102 selects one path to be verified. In one example, the simulation unit 102 selects an air-cut path (second path) without selecting a work path (first path). In a case where the operation program includes a plurality of air-cut paths, the simulation unit 102 may select any one of the plurality of air-cut paths. In one example, the simulation unit 102 may select each air-cut path in order along the direction from upstream to downstream of a series of processes.

In step S103, the simulation unit 102 virtually executes the operation program related to the selected path (for example, air-cut path). The "operation program related to the selected path" is a part of the operation program that defines the control of the robot 2 in the selected path. In the present disclosure, this portion is also referred to as a "unitary operation program". Since the simulation unit 102 virtually executes the unitary operation program, a plurality of interferences for a certain path may be identified. The number of other objects interfering with the robot 2 may be one or more.

In step S104, the simulation unit 102 determines whether or not interference occurs in the selected path based on the simulation execution result. Therefore, the simulation unit 102 also functions as an interference checking unit. In a case where interference does not occur (NO in step S104), the process proceeds to step S107. Step S107 will be described later in detail.

On the other hand, in a case where at least one interference occurs (YES in step S101), the programming assistance device 4 adjusts the parameter related to at least one teaching point corresponding to the path in order to search for a path in which no interference occurs. Then, the programming assistance device 4 virtually executes the operation program corresponding to the path based on the adjusted parameter, and determines whether or not interference occurs in that path. Steps S105 and S106 are related to such re-execution.

In step S105, the simulation unit 102 determines whether or not the path determination is to be terminated. The termination condition may be set or defined by the number of trials or a timeout period, for example.

In a case where path determination is not to be terminated (NO in step S105), the process proceeds to step S106. In step S106, the adjustment unit 103 adjusts a parameter related to at least one teaching point corresponding to the selected path. At least a part of the path is changed by the adjustment of the parameter. In a case where the robot 2 interferes with another object at a plurality of positions (interference positions), the adjustment unit 103 adjusts parameters for at least one teaching point corresponding to each of the plurality of interference positions. That is, the adjustment unit 103 adjusts the parameter of at least one teaching point to eliminate all interference. Hereinafter, as an example of the adjustment, a change in the position of the teaching point and a change in the inward spiral amount will be described.

(Change of position of teaching point)

In one example, the adjustment unit 103 may shift the position of at least one teaching point to a position further away from another object (another object in which interference occurs) than a current position. By changing the position of the teaching point in this way, the distance between the teaching point that defines the path and the other object becomes larger than the current value, and thus the path based on the teaching point is also further away from the other object. As a result, interference may be avoided.

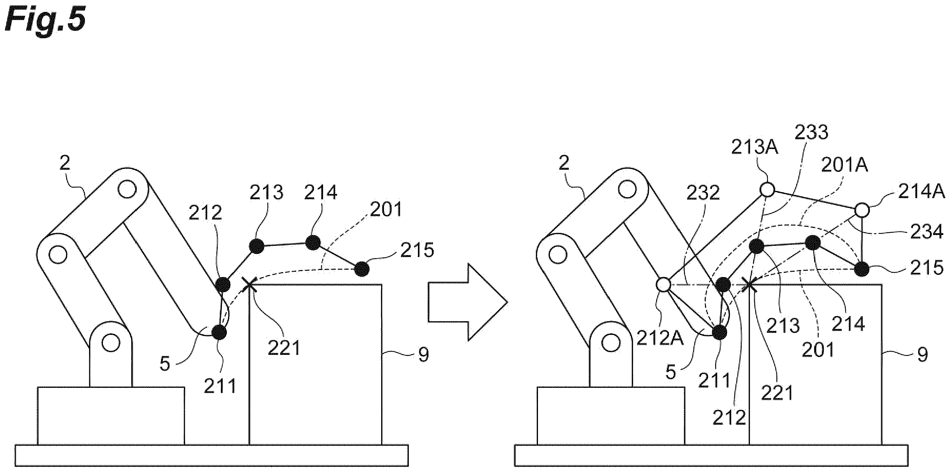

FIG. 5 illustrates an example of adjusting the position of a teaching point. In this example, the adjustment unit 103 selects a teaching point whose position is to be shifted. For example, the adjustment unit 103 identifies a position at which the robot 2 interferes with another object 9 as an interference position, and selects one teaching point corresponding to the interference position as a first teaching point. In one example, the adjustment unit 103 obtains, for each pair of two adjacent teaching points, a part (referred to as a "section") of a path corresponding to the pair, and identifies a section including an interference position. Then, the adjustment unit 103 selects the teaching point positioned downstream in the section as the first teaching point. This process is intended to select, as the first teaching point, the teaching point corresponding to the latest movement target of the robot 2 when the interference occurs. In another example, the adjustment unit 103 may select a teaching point closest to the interference position as the first teaching point.

The adjustment unit 103 may select a plurality of consecutive teaching points including the first teaching point. In one example, the adjustment unit 103 may select a plurality of teaching points positioned upstream with respect to the first teaching point in the selected path. Here, the "teaching point positioned upstream" refers to a teaching point positioned closer to the start point of the path. In another example, the adjustment unit 103 may select a plurality of teaching points positioned downstream with respect to the first teaching point in the selected path (i.e., teaching points positioned closer to the end point of the path). Alternatively, the adjustment unit 103 may select, in the selected path, a plurality of consecutive teaching points from a certain teaching point positioned upstream of the first teaching point to a certain teaching point positioned downstream of the first teaching point. The selected teaching points may comprise a plurality of consecutive teaching points.

In one example, the adjustment unit 103 does not select two teaching points corresponding to the start point and the end point of the selected path as the teaching points whose position are to be shifted. That is, the adjustment unit 103 selects, in the path, at least one of the other teaching points except for the start teaching point and the end teaching point, as the teaching point whose position is to be shifted. This is because both the start point and the end point of a path relate to a connection with an adjacent path, and changing the positions of the start and end teaching points may make the connection inappropriate.

FIG. 5 shows a path 201 of the tip portion 5 of the robot 2 and five teaching points 211 to 215 corresponding to the path 201. It is assumed that the tip portion 5 advances from the teaching point 211 toward the teaching point 215, and therefore, the teaching point 211 is the start point of the path 201 and the teaching point 215 is the end point of the path 201. It is assumed that, in the simulation, the robot 2 (for example, the tip portion 5) interferes with another object 9 at the interference position 221. In one example, the adjustment unit 103 selects the teaching point 214 as the first teaching point corresponding to the interference position 221. For example, the teaching point 214 corresponds to the closest movement target of the robot 2 in a case where interference occurs. Subsequently, the adjustment unit 103 selects a plurality of consecutive teaching points including the teaching point 214. In one example, the adjustment unit 103 further selects the teaching points 212 and 213 positioned upstream with respect to the teaching point 214, and consequently selects the teaching points 212 to 214. The adjustment unit 103 does not select the teaching point 211 that is the start point of the path 201.

After selecting at least one teaching point whose position is to be shifted, the adjustment unit 103 shifts the position of each teaching point to a position further away from the other object 9 than the current position. In one example, the adjustment unit 103 shifts, for each of the selected teaching points, the position of that teaching point along the direction of the virtual line connecting the interference position and the current position. FIG. 5 shows the change of position by this method. In the example of FIG. 5, the adjustment unit 103 shifts the teaching point 212 along the direction of a virtual line 232 connecting the interference position 221 and the current position of the teaching point 212, and as a result, the teaching point 212 moves to a position 212A. Also, the adjustment unit 103 shifts the teaching point 213 along the direction of a virtual line 233 connecting the interference position 221 and the current position of the teaching point 213, and as a result, the teaching point 213 moves to a position 213A. Further, the adjustment unit 103 shifts the teaching point 214 along the direction of a virtual line 234 connecting the interference position 221 and the current position of the teaching point 214, and as a result, the teaching point 214 moves to a position 214A.

In one example, the adjustment unit 103 may increase the shift amount of the position of the teaching point as the distance between the interference position and the current position of the teaching point decreases. In another example, the adjustment unit 103 may calculate the shift amount $\Delta r_m$ using the following equations (1) and (2).

$$[\text{Equation 1}]$$

$$\Delta \mathbf{r_m} = \frac{\mathbf{r_m} - \mathbf{r_{cn}}}{|\mathbf{r_m} - \mathbf{r_{cn}}|} \times M_{PL} \times w\left(|\mathbf{r_m} - \mathbf{r_{cn}}|\right) \quad \cdots (1)$$

$$[\text{Equation 2}]$$

$$w(x) = \frac{1}{1 + \text{Exp}(\alpha(x - \beta))} \quad \cdots (2)$$

In the above equations, $r_m$ is a vector indicating the position of the current teaching point, and $r_{cn}$ is a vector indicating the interference position. The $M_{PL}$ is a given maximum shift amount of the teaching point. The function $w(x)$ is a sigmoid function used to increase the shift amount of the position of the teaching point as the distance between the interference position and the current position of the teaching point decreases. The degree of such shift amount can be determined by adjusting the coefficients $\alpha$ and $\beta$.

Alternatively, the adjustment unit 103 may set the shift amount of the position of the teaching point in consideration of the operation speed of the robot 2 (for example, the speed of the movement of the tip portion 5) at the time of interference. For example, the adjustment unit 103 may increase the shift amount as the speed increases.

In the example of FIG. 5, the teaching points 212, 213, and 214 move to positions 212A, 213A, and 214A, respectively. That is, the current positions of the teaching points 212, 213, and 214 are changed to positions 212A, 213A, and 214A, respectively. As described above, since at least one teaching point moves along the radial direction around the interference position 221, a path 201A is obtained that is farther from the other object 9 than the path 201. Because the distance between the teaching point that defines a path and another object is greater than a current value, the path based on the teaching point is also away from the other object, and thus interference can be avoided.

(Change of inward spiral amount)

In one example, the adjustment unit 103 may decrease the inward spiral amount of at least one teaching point. The inward spiral is a phenomenon in which a trajectory of the robot 2 (for example, a trajectory of the tip portion 5) defined by three consecutive teaching points is shorter than a path connecting the three points with straight lines. The inward spiral amount is a numerical value indicating the degree of the inward spiral. In the present disclosure, the larger the inward spiral amount is, the shorter the length of the trajectory is. Therefore, the larger the inward spiral amount is, the shorter the operation time of the robot 2 is.

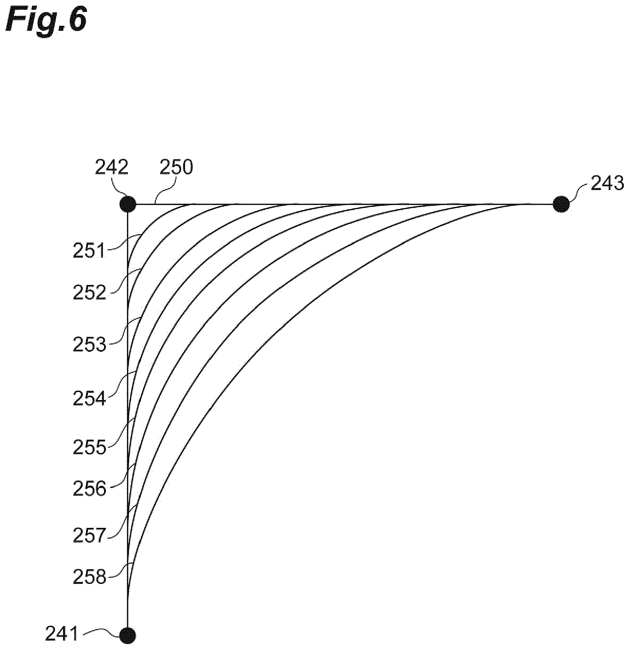

FIG. 6 is a diagram showing an example of the relationship between the teaching point and the trajectory of the robot 2. This example shows three consecutive teaching points 241 to 243, a trajectory 250 connecting the three teaching points with straight lines, and trajectories 251 to 258 of the inward spiral. These trajectories 250 to 258 correspond to the teaching point 242. In this example, it is assumed that the teaching point 241 is the start point and the teaching point 243 is the end point. In general, the robot controller 3 superimposes the speed command for the movement from the teaching point 241 to the teaching point 242 and the speed command for the movement from the teaching point 242 to the teaching point 243 in order to smooth the operation of the robot. By this superposition, the moving distance of the robot 2 is shortened, and as a result, a trajectory not passing through the teaching point 242 is generated. In the example of FIG. 6, the inward spiral amount of the trajectory 250 passing through the teaching point 242 is the smallest at 0, and the inward spiral amount of the trajectory 258 is the largest.

In one example, the adjustment unit 103 sets one inward spiral level among a plurality of inward spiral levels to determine the inward spiral amount. The inward spiral level refers to an index indicating a candidate of the inward spiral amount in a stepwise manner. In the example of FIG. 6, the inward spiral level of the trajectory 250 is 0, the inward spiral level of the trajectory 251 is 1, the inward spiral level of the trajectory 252 is 2, and similarly, the inward spiral levels of the trajectories 253 to 258 are 3 to 8, respectively. Although FIG. 6 shows only the inward spiral level corresponding to the teaching point 242, the inward spiral level is set for all the teaching points constituting the path, and thus is also set at the start point and the end point of the path. In one example, the adjustment unit 103 sets the same inward spiral level for all the teaching points corresponding to the selected path. However, the actual inward spiral amount may vary according to individual teaching points.

Various methods of adjusting the inward spiral amount using the inward spiral level may be used. For example, the adjustment unit 103 may set one inward spiral level among a plurality of inward spiral levels by a binary search method such that the inward spiral amount decreases. For example, if the current inward spiral level is "8", the adjustment unit 103 changes the inward spiral level to "4" (i.e., an intermediate inward spiral level between "0" and "8"). In a case where interference occurs in the simulation based on the inward spiral level "4", the adjustment unit 103 changes the inward spiral level to "2" (that is, an intermediate inward spiral level between "0" and "4"). In a case where no interference occurs in the simulation based on the inward spiral level "4", the adjustment unit 103 changes the inward spiral level to "6" (i.e., an intermediate inward spiral level between "4" and "8"). The adjustment unit 103 may execute the process in this way to identify a maximum value (maximum inward spiral amount) of the inward spiral amounts in which interference does not occur. Alternatively, the adjustment unit 103 may set an inward spiral level one level lower than the current inward spiral level such that the inward spiral amount decreases.

One or more methods of adjusting the parameter related to the teaching point may be used. In any case, the adjustment unit 103 adjusts a parameter of at least one teaching point, for each of one or more interference positions. For example, in a case where the position of a teaching point is adjusted, some teaching points may deviate from the current position more than other teaching points due to the influence of multiple interferences.

After step S106, the process returns to step S103. In step S103, the simulation unit 102 virtually executes the operation program corresponding to the path based on the adjusted parameter. After that, the processes in step S104 and subsequent steps are executed based on the execution result. In a case where the inward spiral level is set by the binary search method, steps S106 and S103 may be executed even when interference does not occur (step S104).

In a case where the path determination is to be terminated (YES in step S105), the process proceeds to step S107. In step S107, the simulation unit 102 checks whether all the paths have been verified or not. In a case where there is a path that has not yet been verified (NO in step S107), the process returns to step S102, and the simulation unit 102 selects the next path to be verified. After that, the processing in step S103 and subsequent steps is executed for that path.

In a case where all the paths have been verified (YES in step S107), the process proceeds to step S108. In step S108, the output unit 104 outputs result data indicating the result of the simulation.

The result data may include an operation program or other data structures. The output unit 104 may output an operation program for which it is confirmed in the simulation that interference does not occur. If no interference occurs in the operation program itself acquired by the reception unit 101, the output unit 104 may output the input operation program as it is. In a case where the path determination is terminated, the output unit 104 outputs an operation program having a possibility of interference. The result data may include other information in addition to or instead of the operation program. For example, the result data may include adjustment information indicating how the parameters for the teaching point have been adjusted, or may include interference information for interference that was unable to be resolved.

Various output destinations may be selected for the result data. For example, the output unit 104 may display the result data on the monitor 20, may store the result data in a recording medium such as the storage 163, or may transmit the result data to another computer such as the robot controller 3. In a case where the result data is displayed on the monitor 20, the output unit 104 may represent the operation of the robot 2 based on the operation program with a moving image or a still image by computer graphics (CG), in response to a user operation or automatically.

In one example, the output unit 104 outputs, to the robot controller 3, an operation program that has been confirmed in the simulation that no interference occurs, and the robot controller 3 controls the robot 2 based on the operation program. Therefore, at least one of the output unit 104 and the robot controller 3 function as a control unit. Since the robot 2 that operates based on the operation program is obtained by the processing flow S1, the processing flow S1 is an example of the simulation method according to the present disclosure.

As described above, in one example, the adjustment unit 103 sets the same inward spiral level for all the teaching points in one path. Meanwhile, the inward spiral level may be different among a plurality of air-cut paths.

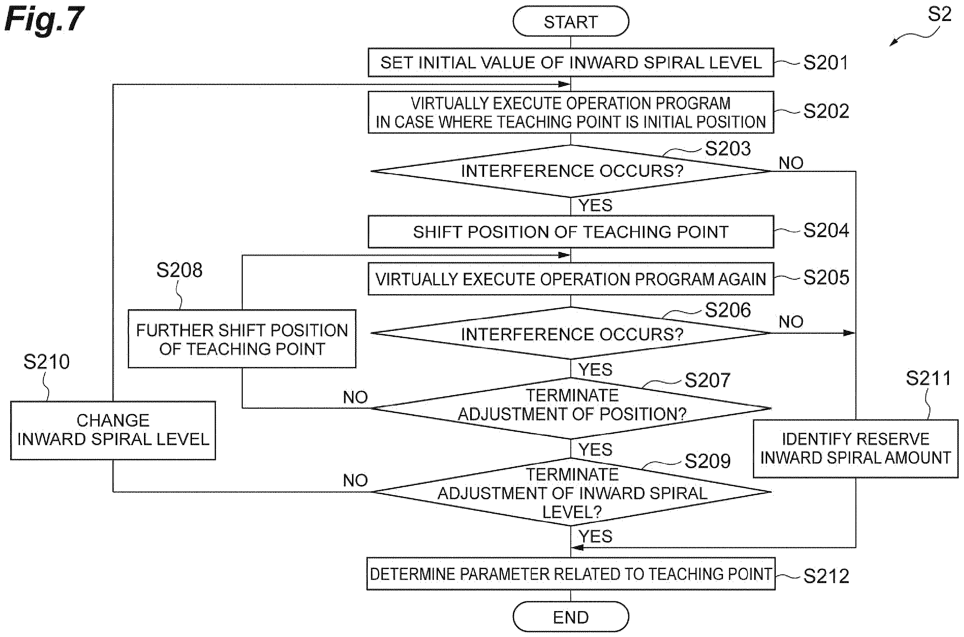

The programming assistance device 4 may adjust the parameter related to the teaching point corresponding to the path by changing both the inward spiral level and the position of the teaching point. An example of this adjustment method will be described with reference to FIG. 7. FIG. 7 is a flowchart showing an example of the operation of the programming assistance device 4 as a processing flow S2. That is, the programming assistance device 4 executes the processing flow S2.

In this processing flow S2, in a case where interference occurs, the adjustment unit 103 executes, one or more times, processing for shifting the position of at least one teaching point to a position further away from another object than the current position, while maintaining the set inward spiral level. In a case where an operation program in which interference does not occur cannot be acquired for the set inward spiral level (i.e., in a case where the operation program is unable to avoid the interference for the set inward spiral level), the adjustment unit 103 sets another inward spiral level corresponding to a smaller inward spiral amount. While maintaining the new inward spiral level, the adjustment unit 103 executes, one or more times, the process of shifting the position of at least one teaching point to a position further away from the other object. In short, the adjustment unit 103 searches for a path in which interference does not occur while shifting the position of the teaching point with a certain inward spiral level (inward spiral amount) maintained. In a case where such a path cannot be found at the inward spiral level, the adjustment unit 103 sets a new inward spiral level (that is, decreases the inward spiral amount), and searches for a path in which interference does not occur while shifting the position of the teaching point. The adjustment unit 103 repeatedly changes the positions of the inward spiral level and the teaching point, and searches for a path in which interference does not occur.

The processing flow S2 is a process for one path. The programming assistance device 4 executes the processing flow S2 for all paths to be verified.

In step S201, the simulation unit 102 sets the initial value of the inward spiral level. In one example, the simulation unit 102 sets the same inward spiral level for all teaching points corresponding to the path. For example, the initial value of the inward spiral level is the inward spiral level at which the inward spiral amount is the maximum (the inward spiral level "8" in the example of FIG. 6).

In step S202, the simulation unit 102 virtually executes the operation program (unitary operation program) in a case where the teaching point is the initial position.

In step S203, the simulation unit 102 determines whether or not interference occurs in the selected path. In a case where interference occurs (YES in step S203), the process proceeds to step S204.

In step S204, the adjustment unit 103 shifts the position of at least one teaching point. Various methods for shifting the position may be used, as described with reference to the processing flow S 1. In a case where the robot 2 interferes with another object at a plurality of interference positions, the adjustment unit 103 shifts the position of at least one teaching point to eliminate all interference. This is an example of a process of adjusting a parameter for at least one teaching point corresponding to each of a plurality of interference positions.

In step S205, the simulation unit 102 virtually executes the operation program (unitary operation program) corresponding to the path based on the adjusted position of the teaching point.

In step S206, the simulation unit 102 determines whether or not interference occurs in the selected path. As shown in steps S207 and S208, the process of checking the presence or absence of interference while shifting the position of the teaching point is repeated until the simulation unit 102 determines that the adjustment of the position is to be terminated.

In step S 209, the simulation unit 102 determines whether or not the adjustment of the inward spiral level is to be terminated. In a case where the adjustment is not to be terminated (NO in step S209), the process proceeds to step S210.

In step S210, the adjustment unit 103 changes the inward spiral level by a given method. Various methods for changing the inward spiral level may be used, as described with reference to the processing flow S1. In a case where the robot 2 interferes with another object at a plurality of interference positions, the adjustment unit 103 changes the inward spiral amount so as to eliminate all interference. This is an example of a process of adjusting a parameter for at least one teaching point corresponding to each of a plurality of interference positions. Subsequently, the processing in step S202 and the subsequent steps is executed again for the changed inward spiral level.

In a case where a path in which interference does not occur can be identified at a certain inward spiral level (NO in step S203 or NO in step S206), the process proceeds to step S211. In one example, at this stage, the simulation unit 102 or the adjustment unit 103 has identified the maximum inward spiral amount at which no interference occurs in the virtual execution of the unitary operation program.

In step S211, the adjustment unit 103 identifies, as a reserve inward spiral amount, an inward spiral amount that is smaller than the maximum inward spiral amount and that does not cause another interference. In one example, the adjustment unit 103 identifies one or more reserve inward spiral amounts while sequentially increasing the inward spiral level from 0 one step by one step. The reserve inward spiral amount may not be obtained in this process.

In step S212, the simulation unit 102 determines parameters related to at least one teaching point corresponding to the path. At this stage, a path (parameter group) in which interference does not occur may or may not be obtained.

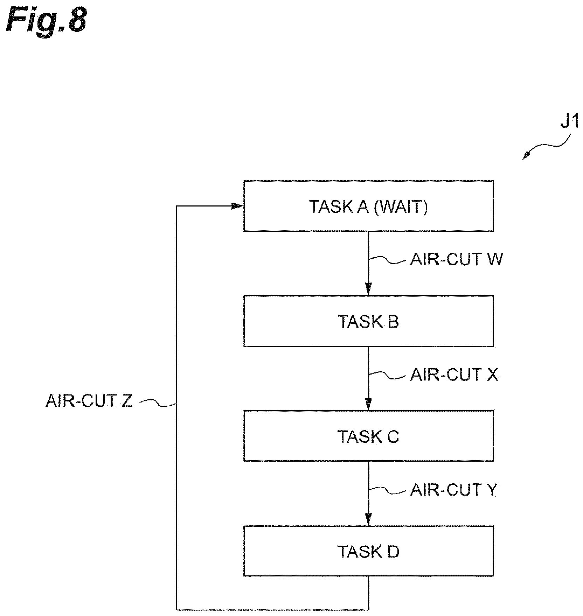

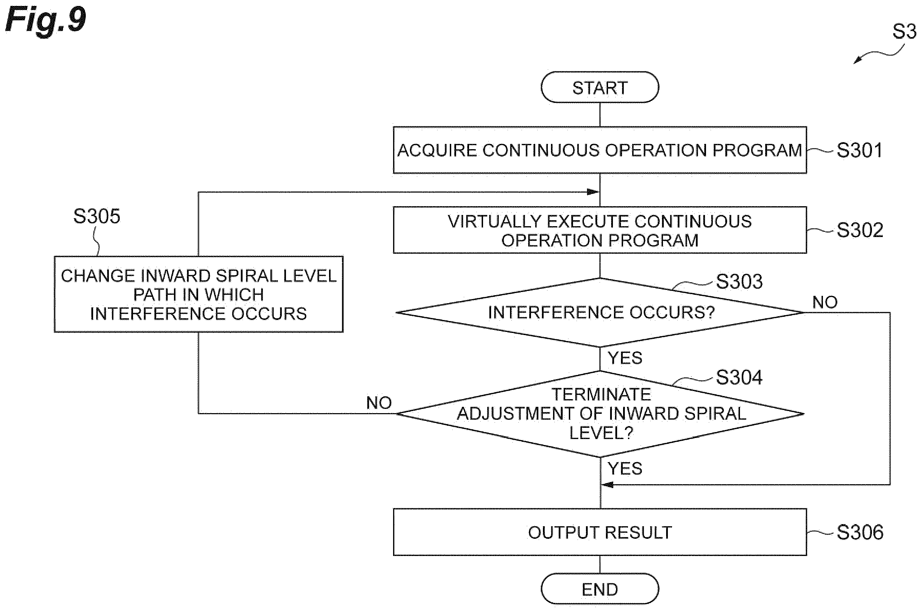

Next, with reference to FIGS. 8 and 9, a process of virtually executing an operation program related to a plurality of continuous paths will be described. The "operation program related to a plurality of continuous paths" is a part of the operation program that defines control of the robot 2 in the plurality of continuous paths. In the present disclosure, that part is also referred to as a "continuous operation program".

FIG. 8 is a diagram showing an example of a series of processes represented by an operation program. In this example, the operation program J1 includes four tasks A, B, C, and D and four air-cut paths W, X, Y, and Z. It is assumed that task A is a task for causing robot 2 to wait, and tasks B, C, and D are a series of subsequent tasks. The air-cut path W is provided between tasks A and B, the air-cut path X is provided between tasks B and C, the air-cut path Y is provided between tasks C and D, and the air-cut path Z is provided between tasks D and A. The number and combination of paths corresponding to the continuous operation program are not limited to the example shown in FIG. 8. For example, the continuous operation program may correspond to the work path of task A and the air-cut path W, or may correspond to the air-cut path W and the work path of task B. Alternatively, the continuous operation program may correspond to the work path of task D, the air-cut path Z, and the work path of task A. Alternatively, the continuous operation program may be the whole of the operation program J1.

Even if interference does not occur in one path (i.e., in a unitary operation program), when the robot 2 operates across a plurality of paths, new interference may occur because a trajectory of an inward spiral is generated even in a connection part of the paths. Further automation in the planning of robot control can be realized by simulation of a unitary operation program, but the programming assistance device 4 may also execute simulation for a continuous operation program.

FIG. 9 is a flowchart showing an example of the operation of the programming assistance device 4 as a processing flow S3. That is, the programming assistance device 4 executes the processing flow S3.

In step S301, the reception unit 101 acquires the continuous operation program. For example, the reception unit 101 may receive a continuous operation program input by a user, read a continuous operation program from a given storage device based on a user input, or receive a continuous operation program transmitted from another computer. In any case, all air-cut paths (second paths) included in the acquired continuous operation program are paths for which it has already been confirmed by the processing flow S1 or S2 or the like that no interference occurs.

In step S302, the simulation unit 102 virtually executes the continuous operation program. This corresponds to a process in which the simulation unit 102 virtually executes the unitary operation program related to the air-cut path, and further virtually executes the continuous operation program related to the continuous work path and the air-cut path in a case where no interference occurs in the air-cut path.

In step S303, the simulation unit 102 determines whether or not interference occurs in the continuous operation program based on the execution result of the simulation. In a case where interference does not occur (NO in step S303), the process proceeds to step S306. Step S306 will be described later in detail.

On the other hand, in a case where at least one interference occurs (YES in step S303), the programming assistance device 4 changes the inward spiral level of the path in which the interference occurs until it is determined that the adjustment of the inward spiral level is to be terminated. Steps S304 and S305 show the subsequent processes.

In step S 304, the simulation unit 102 determines whether or not the adjustment of the inward spiral level is to be terminated. The termination condition may be set or defined by the number of trials or a timeout period, for example.

In a case where the adjustment of the inward spiral level is not terminated (NO in step S304), the process proceeds to step S305. In step S305, the adjustment unit 103 changes the inward spiral level of the selected path. In one example, in a case where the robot 2 interferes with another object in the air-cut path in which the maximum inward spiral amount is set, the adjustment unit 103 changes the inward spiral amount corresponding to the air-cut path to the reserve inward spiral amount. In a case where the robot 2 interferes with another object at a plurality of interference positions, the adjustment unit 103 changes the inward spiral amount so as to eliminate all interference. This is an example of a process of adjusting a parameter for at least one teaching point corresponding to each of a plurality of interference positions. After that, the processing in step S302 and the subsequent steps is executed for the changed inward spiral amount. In a case where the adjustment of the inward spiral level is to be terminated (YES in step S304), the process proceeds to step S306.

In step S 306, the output unit 104 outputs the result data indicating the result of the simulation. The data structure and output destination of the result data may be configured similarly as described in step S108. Since the robot 2 that operates based on the operation program is obtained by the processing flow S3, the processing flow S3 is also an example of the simulation method according to the present disclosure.

In one example, in any of the processing flows S1, S2, and S3, the adjustment unit 103 adjusts the parameter related to the teaching point for the air-cut path (first path) without changing the work path (second path). Typically, the work path is set based on user input and the air-cut path is set automatically. Therefore, the automatic adjustment of the parameter may be selectively executed for the air-cut path.

[Program]

Each functional module of the programming assistance device 4 is realized by reading a simulation program on the processor 161 or the memory 162 and causing the processor 161 to execute the program. The simulation program includes codes for implementing each functional module of the programming assistance device 4. The processor 161 operates the input/output port 164 according to the simulation program, and executes reading and writing of data in the memory 162 or the storage 163. By such processing, each functional module of the programming assistance device 4 is realized.

The simulation program may be provided after being fixedly recorded on a non-transitory recording medium such as a CD-ROM, a DVD-ROM, or a semiconductor memory. Alternatively, the simulation program may be provided through a communication network as a data signal superimposed on a carrier wave.

As described above, a simulation system according to an aspect of the present disclosure includes: a simulation unit configured to virtually execute an operation program including a path representing a trajectory of a robot, on a virtual space in which the robot and another object are arranged; an interference checking unit configured to check whether there is an interference between the robot and the other object based on an execution result of the operation program; and an adjustment unit configured to adjust a parameter related to at least one teaching point corresponding to the path in response to detecting the interference, wherein the operation program includes a work path and an air-cut path, the work path being set based on a user input and indicating a first trajectory of the robot in a task, the air-cut path being automatically set and indicating a second trajectory of the robot connecting tasks, and the adjustment unit is further configured to adjust the parameter for the air-cut path without changing the work path.

A simulation method according to an aspect of the present disclosure is a simulation method executed by a simulation system including at least one processor. The simulation method includes: virtually executing an operation program including a path representing a trajectory of a robot, on a virtual space in which the robot and another object are arranged; checking whether there is an interference between the robot and the other object based on an execution result of the operation program; and adjusting a parameter related to at least one teaching point corresponding to the path in response to detecting the interference, wherein the operation program includes a work path and an air-cut path, the work path being set based on a user input and indicating a first trajectory of the robot in a task, the air-cut path being automatically set and indicating a second trajectory of the robot connecting tasks, and the adjusting includes adjusting the parameter for the air-cut path without changing the work path.

A computer-readable storage medium according to an aspect of the present disclosure stores a simulation program for causing a computer to execute: virtually executing an operation program including a path representing a trajectory of a robot, on a virtual space in which the robot and another object are arranged; checking whether there is an interference between the robot and the other object based on an execution result of the operation program; and adjusting a parameter related to at least one teaching point corresponding to the path in response to detecting the interference, wherein the operation program includes a work path and an air-cut path, the work path being set based on a user input and indicating a first trajectory of the robot in a task, the air-cut path being automatically set and indicating a second trajectory of the robot connecting tasks, and the adjusting includes adjusting the parameter for the air-cut path without changing the work path.

In the simulation system according to another aspect, the system may further include a control unit configured to, in a case where the interference does not occur in the path based on the adjusted parameter, control the robot based on the operation program including the path.

In the simulation method according to another aspect, the method may further include controlling, in a case where the interference does not occur in the path based on the adjusted parameter, the robot based on the operation program including the path.

In any one of these aspects, since the parameter of the teaching point corresponding to the path in which the interference occurs is automatically changed, the robot control planning can be further automated. As a method for avoiding interference, it is conceivable to reset a path when automatically generating the path. However, since the automatic generation has a characteristic of shortening the distance of the trajectory, interference cannot be avoided in many cases only by the automatic generation. On the other hand, conventionally, the changing of the teaching point is manually performed by trial and error, which takes time and effort. In the above aspect, the manual adjustment is automated and, as a result, an appropriate operation program can be efficiently obtained.

In the simulation system according to another aspect, the simulation unit may be further configured to: virtually execute a unitary operation program which is a part of the operation program that relates to the air-cut path; and in response to no interference occurring in the air-cut path, further virtually execute a continuous operation program which is a part of the operation program that relates to a sequence of the work path and the air-cut path. In this case, a series of paths may be automatically set (for example, a series of paths that can achieve the user's purpose) without affecting the first path defined by the user.

In the simulation system according to another aspect, the adjustment unit may be further configured to: identify, in virtual execution of the unitary operation program, a maximum inward spiral amount that is an inward spiral amount of a teaching point corresponding to the air-cut path and at which the interference does not occur, and a reserve inward spiral amount that is smaller than the maximum inward spiral amount and at which another interference does not occur, the inward spiral amount being a numerical value indicating a degree of an inward spiral of the trajectory of the robot defined by three consecutive teaching points, the inward spiral of the trajectory of the robot is shorter than a path connecting the three consecutive points with straight lines; and change, in the virtual execution of the continuous operation program, the inward spiral amount corresponding to the air-cut path to the reserve inward spiral amount in a case where the robot interferes with the other object in the air-cut path in which the maximum inward spiral amount is set. In the continuous operation program, interference that cannot be detected from the execution of the unitary operation program may occur. Not only by obtaining the maximum inward spiral amount, but also by obtaining another inward spiral amount that does not cause interference as the reserve inward spiral amount, a series of paths can be efficiently set.

In the simulation system according to another aspect, the adjustment unit may be further configured to, in response to the robot interfering with the other object at a plurality of interference positions, adjust the parameter for the at least one teaching point corresponding to each of the plurality of interference positions. Since the parameter of the tearing point is adjusted for each of the interferences at a plurality of locations, a path can be efficiently set in which no interference occurs.

In the simulation system according to another aspect, adjusting the parameter, in response to detecting the interference, may include shifting a position of the at least one teaching point to a position further away from the other object than a current position. By further separating the teaching point from another object, the path is also separated from the other object, and thus a path that does not interfere can be readily set.

In the simulation system according to another aspect, the adjustment unit may be further configured to shift the position of the at least one teaching point along a direction of a virtual line connecting an interference position and the current position. The teaching point is further separated from another object while increasing the distance between adjacent teaching points in order to reliably set a path that does not interfere.

In the simulation system according to another aspect, the adjustment unit may be further configured to increase a shift amount of the position of the teaching point as a distance between the interference position and the current position decreases. By adjusting the shift amount in this manner, the shortest path may be set without any interference.

In the simulation system according to another aspect, adjusting the parameter, in response to detecting the interference, may further include shifting positions of a plurality of consecutive teaching points including a first teaching point corresponding to an interference position, to positions further away from the other object. A plurality of teaching points near the interference position are adjusted in order to efficiently set a path that does not interfere.

In the simulation system according to another aspect, the plurality of consecutive teaching points may additionally include an upstream teaching point, and the adjustment unit may be further configured to shift a position of the upstream teaching point positioned upstream with respect to the first teaching point in the path. Since the section of the path that causes interference is adjusted, the path that does not interfere can be efficiently set.

In the simulation system according to another aspect, the adjustment unit may be further configured to shift, without shifting a start teaching point and an end teaching point in the path, a position of the at least one teaching point selected from one or more remaining teaching points in the path.

In the simulation system according to another aspect, the adjustment unit may be further configured to, in response to detecting the interference, decrease an inward spiral amount of the at least one teaching point, as the adjustment of the parameter, the inward spiral amount being a numerical value indicating a degree of an inward spiral of the trajectory of the robot. By decreasing the inward spiral amount, a path that does not interfere can be readily set.

In the simulation system according to another aspect, the adjustment unit may be further configured to set one inward spiral level among a plurality of inward spiral levels by a binary search method, such that the inward spiral amount decreases, each of the plurality of inward spiral levels being an index indicating a candidate of the inward spiral amount in a stepwise manner. By expressing the candidate of the inward spiral amount by the inward spiral level and then using the binary search method, a path that does not interfere may be efficiently set.

In the simulation system according to another aspect, the adjustment unit may be further configured to set the one inward spiral level corresponding to a maximum inward spiral amount at which the interference does not occur, among the plurality of inward spiral levels, by the binary search method.

In the simulation system according to another aspect, the adjustment unit may be further configured to set the same inward spiral level for all teaching points corresponding to the path. By unifying the inward spiral level in the path, the inward spiral amount can be readily set. Furthermore, a smoother path can be obtained.

In the simulation system according to another aspect, the adjustment unit may be further configured to: execute, in response to detecting the interference, a process of shifting a position of the at least one teaching point to a position further away from the other object than a current position one or more times while maintaining the set inward spiral level, as the adjustment of the parameter; and in a case where the operation program is unable to avoid the interference for the set inward spiral level, set another inward spiral level corresponding to a smaller inward spiral amount. By executing the moving of the teaching point and the setting of the inward spiral level in such a procedure, the shortest path may be set without causing any interference.

[Additional Examples]

The present disclosure has been described above in detail based on the examples. However, the present disclosure is not limited to the above examples. The present disclosure can be variously modified without departing from the gist thereof.

In one or more of the above examples, the programming assistance device 4 adjusts the parameter of the teaching point for the air-cut path (second path) without changing the work path (first path), but the simulation system may also adjust the parameter of the teaching point for the first path.

In one or more of the above examples, the programming assistance device 4 includes the reception unit 101, the simulation unit 102, the adjustment unit 103, and the output unit 104, but the simulation method and the robot manufacturing method can be executed using other functional configurations.

The hardware configuration of the simulation system may include a mode in which each functional module is realized by executing a program. However, in other examples, at least a part of the reception unit 101, the simulation unit 102, the adjustment unit 103, and the output unit 104 may be configured by logic circuitry specialized for the function thereof, or may be configured by an application specific integrated circuit (ASIC) in which the logic circuitry is integrated.

Additionally, some of the above-described steps (processes) may be omitted, or the steps may be executed in a different order. Furthermore, two or more steps among the above-described steps may be combined, or a part of the steps may be modified or deleted. Alternatively, other steps may be executed in addition to the above steps.

In a case where the magnitude relationship between two numerical values is compared in a computer system or a computer, either of two criteria "greater than or equal to" and "greater than" may be used, and either of two criteria "less than or equal to" and "less than" may be used. The selection of such a criterion may be used to compare the magnitudes of two numerical values.

It is to be understood that not all aspects, advantages and features described herein may necessarily be achieved by, or included in, any one particular example embodiment. Indeed, having described and illustrated various examples herein, it should be apparent that other examples may be modified in arrangement and detail. For example, the system for executing the return operation in accordance with the return command after the counteractive operation has been described. However, when the counteractive operation is completed, at least the operation of the robot that has executed the counteractive operation may be completed.

**Claims**

1. A simulation system (4) comprising:

   a simulation unit (102) configured to virtually execute an operation program including a path representing a trajectory of a robot (2), on a virtual space in which the robot (2) and another object (9) are arranged;
   an interference checking unit (102) configured to check whether there is an interference between the robot (2) and the other object (9) based on an execution result of the operation program; and

an adjustment unit (103) configured to adjust a parameter related to at least one teaching point corresponding to the path in response to detecting the interference, in order to eliminate the interference,

wherein the operation program includes a work path and an air-cut path, the work path being set based on a user input and indicating a first trajectory of the robot (2) in a task,

the air-cut path being automatically set and indicating a second trajectory of the robot (2) connecting tasks, and

the simulation unit (102) is configured to:

> virtually execute a unitary operation program which is a part of the operation program that relates to the air-cut path; and
> in response to no interference occurring in the air-cut path, further virtually execute a continuous operation program which is a part of the operation program that relates to a sequence of the work path and the air-cut path, and

the adjustment unit (103) is configured to adjust the parameter related to the at least one teaching point corresponding to the air-cut path without changing the work path, in response to detecting the interference in the air-cut path.

2. The simulation system (4) according to claim 1, wherein
the adjustment unit (103) is configured to:

> identify, in virtual execution of the unitary operation program, a maximum inward spiral amount that is an inward spiral amount of a teaching point corresponding to the air-cut path and at which the interference does not occur, and a reserve inward spiral amount that is smaller than the maximum inward spiral amount and at which another interference does not occur, the inward spiral amount being a numerical value indicating a degree of an inward spiral of the trajectory of the robot (2) defined by three consecutive teaching points, the inward spiral of the trajectory of the robot (2) is shorter than a path connecting the three consecutive points with straight lines; and
> change, in the virtual execution of the continuous operation program, the inward spiral amount corresponding to the air-cut path to the reserve inward spiral amount in a case where the robot (2) interferes with the other object (9) in the air-cut path in which the maximum inward spiral amount is set.

3. The simulation system (4) according to claim 1 or 2, wherein
the adjustment unit (103) is configured to, in response to the robot (2) interfering with the other object (9) at a plurality of interference positions, adjust the parameter for the at least one teaching point corresponding to each of the plurality of interference positions.

4. The simulation system (4) according to any one of claims 1 to 3, wherein
adjusting the parameter, in response to detecting the interference, comprises shifting a position of the at least one teaching point to a position further away from the other object (9) than a current position.

5. The simulation system (4) according to claim 4, wherein
the adjustment unit (103) is configured to shift the position of the at least one teaching point along a direction of a virtual line connecting an interference position and the current position.

6. The simulation system (4) according to claim 5, wherein
the adjustment unit (103) is configured to increase a shift amount of the position of the teaching point as a distance between the interference position and the current position decreases.

7. The simulation system (4) according to any one of claims 4 to 6, wherein
adjusting the parameter, in response to detecting the interference, comprises shifting positions of a plurality of consecutive teaching points including a first teaching point corresponding to an interference position, to positions further away from the other object (9).

8. The simulation system (4) according to claim 7, wherein
the plurality of consecutive teaching points additionally comprises an upstream teaching point, and wherein the adjustment unit (103) is configured to shift a position of the upstream teaching point positioned upstream with respect to the first teaching point in the path.

9. The simulation system (4) according to any one of claims 1 to 8, wherein
the adjustment unit (103) is configured to, in response to detecting the interference, decrease an inward spiral amount of the at least one teaching point, as the adjustment of the parameter, the inward spiral amount being a numerical value indicating a degree of an inward spiral of the trajectory of the robot (2).

10. The simulation system (4) according to claim 9, wherein
the adjustment unit (103) is configured to set one inward spiral level among a plurality of inward spiral levels by a binary search method, such that the inward spiral amount decreases, each of the plurality of inward spiral levels being an index indicating a candidate of the inward spiral amount in a stepwise manner.

11. The simulation system (4) according to claim 10, wherein
the adjustment unit (103) is configured to:

> execute, in response to detecting the interference, a process of shifting a position of the at least one teaching point to a position further away from the other object (9) than a current position one or more times while maintaining the set inward spiral level, as the adjustment of the parameter; and
> in a case where the operation program is unable to avoid the interference for the set inward spiral level, set another inward spiral level corresponding to a smaller inward spiral amount.

12. A simulation method executed by a simulation system (4) comprising at least one processor, the simulation method comprising:

> virtually executing (S103) an operation program including a path representing a trajectory of a robot (2), on a virtual space in which the robot (2) and another object (9) are arranged;
> checking (S104) whether there is an interference between the robot (2) and the other object (9) based on an execution result of the operation program; and
> adjusting (S105) a parameter related to at least one teaching point corresponding to the path in response to detecting the interference, in order to eliminate the interference,
> wherein the operation program includes a work path and an air-cut path, the work path being set based on a user input and indicating a first trajectory of the robot (2) in a task, the air-cut path being automatically set and indicating a second trajectory of the robot (2) connecting tasks, and the virtually executing the operation program includes:
>
>> virtually executing (S103) a unitary operation program which is a part of the operation program that relates to the air-cut path; and
>> in response to no interference occurring in the air-cut path, further virtually executing (S302) a continuous operation program which is a part of the operation program that relates to a sequence of the work path and the air-cut path, and

> the adjusting includes adjusting (S304) the parameter related to the at least one teaching point corresponding to the air-cut path without changing the work path, in response to detecting the interference in the air-cut path.

13. A simulation program comprising instructions which, when the program is executed by
a computer, cause the computer to carry out:

> virtually executing (S103) an operation program including a path representing a trajectory of a robot (2), on a virtual space in which the robot (2) and another object (9) are arranged;
> checking (S104) whether there is an interference between the robot (2) and the other object (9) based on an execution result of the operation program; and
> adjusting (S105) a parameter related to at least one teaching point corresponding to the path in response to detecting the interference, in order to eliminate the interference,
> wherein the operation program includes a work path and an air-cut path, the work path being set based on a user input and indicating a first trajectory of the robot (2) in a task, the air-cut path being automatically set and indicating a second trajectory of the robot (2) connecting tasks, and the virtually executing the operation program includes:
>
>> virtually executing (S103) a unitary operation program which is a part of the operation program that relates to the air-cut path; and
>> in response to no interference occurring in the air-cut path, further virtually executing (S302) a continuous operation program which is a part of the operation program that relates to a sequence of the work path and the air-cut path, and
>
> the adjusting includes adjusting (S304) the parameter related to the at least one teaching point corresponding to the air-cut path without changing the work path, in response to detecting the interference in the air-cut path.

**Patentansprüche**

1. Ein Simulationssystem (4), das Folgendes umfasst:

eine Simulationseinheit (102), die so konfiguriert ist, dass sie ein Betriebsprogramm, das einen Pfad enthält, der eine Trajektorie eines Roboters (2) darstellt, virtuell in einem virtuellen Raum ausführt, in dem der Roboter (2) und ein anderes Objekt (9) angeordnet sind;

eine Interferenzprüfeinheit (102), die so konfiguriert ist, dass sie auf der Grundlage eines Ausführungsergebnisses des Betriebsprogramms prüft, ob es eine Interferenz zwischen dem Roboter (2) und dem anderen Objekt (9) gibt; und

eine Einstelleinheit (103), die so konfiguriert ist, dass sie einen Parameter bezogen auf zumindest einen Lehrpunkt entsprechend zu dem Pfad als Antwort zum Erkennen der Interferenz einstellt, um die Interferenz zu beseitigen, wobei das Betriebsprogramm einen Arbeitspfad und einen Luftschneidepfad enthält, wobei der Arbeitspfad auf der Grundlage einer Benutzereingabe eingestellt wird und eine erste Trajektorie des Roboters (2) in einer Aufgabe anzeigt, wobei der Luftschneidepfad automatisch eingestellt wird und eine zweite Trajektorie des Roboters (2) anzeigt, die Aufgaben verbindet, und die Simulationseinheit (102) konfiguriert ist, um:

virtuell ein einheitliches Betriebsprogramm auszuführen, das ein Teil des Betriebsprogramms ist, das sich auf den Luftschneidepfad bezieht; und

als Reaktion darauf, dass keine Störung in dem Luftschneidepfad auftritt, weiterhin virtuell ein kontinuierliches Betriebsprogramm auszuführt, das ein Teil des Betriebsprogramms ist, das sich auf eine Sequenz des Arbeitspfads und des Luftschneidepfads bezieht, und

die Einstelleinheit (103) so konfiguriert ist, dass sie den Parameter bezogen auf den zumindest einen Lehrpunkt korrespondierend zu dem Luftschneidepfad adjustiert, ohne den Arbeitspfad zu ändern, als Antwort zum Erkennen der Interferenz in dem Luftschneidepfad.

2. Das Simulationssystem (4) nach Anspruch 1, wobei die Einstelleinheit (103) konfiguriert ist, um:

bei der virtuellen Ausführung des einheitlichen Betriebsprogramms einen maximalen Einwärtsspiralbetrag, der ein Einwärtsspiralbetrag eines Lehrpunkts ist, der dem Luftschneidepfad entspricht und bei dem die Störung nicht auftritt, und einen Reserve-Einwärtsspiralbetrag, der kleiner als der maximale Einwärtsspiralbetrag ist und bei dem eine weitere Störung nicht auftritt, zu identifizieren, wobei der Einwärtsspiralbetrag ein numerischer Wert ist, der einen Grad einer Einwärtsspirale der Trajektorie des Roboters (2) angibt, die durch drei aufeinanderfolgende Lernpunkte definiert ist, wobei die Einwärtsspirale der Trajektorie des Roboters (2) kürzer ist als ein Weg, der die drei aufeinanderfolgenden Punkte mit geraden Linien verbindet; und bei der virtuellen Ausführung des kontinuierlichen Betriebsprogramms den Betrag der Einwärtsspirale, der dem Luftschneidepfad entspricht, auf den Reservebetrag der Einwärtsspirale in einem Fall zu ändern, in dem der Roboter (2) mit dem anderen Objekt (9) in dem Luftschneidepfad interferiert, in dem der maximale Betrag der Einwärtsspirale eingestellt ist.

3. Das Simulationssystem (4) nach Anspruch 1 oder 2, wobei
die Einstelleinheit (103) so konfiguriert ist, dass sie als Reaktion darauf, dass der Roboter (2) mit dem anderen Objekt (9) an einer Vielzahl von Interferenzpositionen interferiert, den Parameter für den mindestens einen Lehrpunkt entsprechend jeder der Vielzahl von Interferenzpositionen einstellt.

4. Das Simulationssystem (4) nach einem der Ansprüche 1 bis 3, wobei
das Anpassen des Parameters als Reaktion auf das Erkennen der Störung das Verschieben einer Position des mindestens einen Lehrpunkts in eine Position umfasst, die weiter von dem anderen Objekt (9) als eine aktuelle Position entfernt ist.

5. Das Simulationssystem (4) nach Anspruch 4, wobei
die Einstelleinheit (103) so konfiguriert ist, dass sie die Position des mindestens einen Lehrpunkts entlang einer Richtung einer virtuellen Linie verschiebt, die eine Interferenzposition und die aktuelle Position verbindet.

6. Das Simulationssystem (4) nach Anspruch 5, wobei
die Einstelleinheit (103) so konfiguriert ist, dass sie einen Verschiebungsbetrag der Position des Lehrpunkts erhöht, wenn ein Abstand zwischen der Interferenzposition und der aktuellen Position abnimmt.

7. Das Simulationssystem (4) nach einem der Ansprüche 4 bis 6, wobei
das Einstellen des Parameters als Reaktion auf das Erkennen der Störung das Verschieben von Positionen einer Vielzahl von aufeinanderfolgenden Lehrpunkten, einschließlich eines ersten Lehrpunkts, der einer Störungsposition entspricht, zu Positionen, die weiter von dem anderen Objekt (9) entfernt sind, umfasst.

8. Das Simulationssystem (4) nach Anspruch 7, wobei
die Mehrzahl aufeinanderfolgender Lehrpunkte zusätzlich einen stromaufwärts gelegenen Lehrpunkt umfasst, und wobei die Einstelleinheit (103) so konfiguriert ist, dass sie eine Position des stromaufwärts gelegenen Lehrpunktes, der in Bezug auf den ersten Lehrpunkt im Pfad stromaufwärts gelegen ist, verschiebt.

9. Das Simulationssystem (4) nach einem der Ansprüche 1 bis 8, wobei
   die Einstelleinheit (103) so konfiguriert ist, dass sie als Reaktion auf das Erkennen der Störung einen Einwärtsspiralbetrag des mindestens einen Lehrpunkts als die Einstellung des Parameters verringert, wobei der Einwärtsspiralbetrag ein numerischer Wert ist, der einen Grad einer Einwärtsspirale der Bahn des Roboters (2) anzeigt.

10. Das Simulationssystem (4) nach Anspruch 9, wobei die Einstelleinheit (103) so konfiguriert ist, dass sie ein Einwärtsspiralniveau aus einer Vielzahl von Einwärtsspiralniveaus durch ein binäres Suchverfahren einstellt, so dass der Einwärtsspiralbetrag abnimmt, wobei jedes der Vielzahl von Einwärtsspiralniveaus ein Index ist, der einen Kandidaten für den Einwärtsspiralbetrag schrittweise anzeigt.

11. Das Simulationssystem (4) nach Anspruch 10, wobei
    die Anpassungseinheit (103) konfiguriert ist, um:

    als Reaktion auf das Erfassen der Störung einen Prozess des Verschiebens einer Position des mindestens einen Lehrpunkts zu einer Position, die weiter von dem anderen Objekt (9) entfernt ist als eine aktuelle Position, ein oder mehrere Male auszuführen, während das eingestellte Einwärtsspiralniveau beibehalten wird, als die Einstellung des Parameters; und
    in einem Fall, in dem das Betriebsprogramm nicht in der Lage ist, die Störung für das eingestellte Einwärtsspiralniveau zu vermeiden, ein anderes Einwärtsspiralniveau einzustellen, das einem kleineren Einwärtsspiralbetrag entspricht.

12. Simulationsverfahren, das von einem Simulationssystem (4) ausgeführt wird, das mindestens einen Prozessor umfasst, wobei das Simulationsverfahren Folgendes umfasst:

    virtuelles Ausführen (S103) eines Betriebsprogramms mit einem Pfad, der eine Trajektorie eines Roboters (2) darstellt, in einem virtuellen Raum, in dem der Roboter (2) und ein anderes Objekt (9) angeordnet sind;
    Prüfen (S104), ob es eine Störung zwischen dem Roboter (2) und dem anderen Objekt (9) gibt, basierend auf einem Ausführungsergebnis des Betriebsprogramms; und
    Einstellen (S105) eines Parameters, der sich auf mindestens einen Lehrpunkt bezieht, der dem Pfad entspricht, als Reaktion auf das Erfassen der Störung, um die Störung zu beseitigen, wobei das Betriebsprogramm einen Arbeitspfad und einen Luftschneidepfad enthält, wobei der Arbeitspfad auf der Grundlage einer Benutzereingabe eingestellt wird und eine erste Trajektorie des Roboters (2) in einer Aufgabe anzeigt, wobei der Luftschneidepfad automatisch eingestellt wird und eine zweite Trajektorie des Roboters (2) anzeigt, die Aufgaben verbindet, und das virtuelle Ausführen des Betriebsprogramms umfasst:

    virtuelles Ausführen (S103) eines einheitlichen Betriebsprogramms, das ein Teil des Betriebsprogramms ist, das sich auf den Luftschneidepfad bezieht; und
    als Reaktion darauf, dass keine Störung in dem Luftschneidepfad auftritt, ferner virtuelles Ausführen (S302) eines kontinuierlichen Betriebsprogramms, das ein Teil des Betriebsprogramms ist, das sich auf eine Sequenz des Arbeitspfads und dem Luftschneidepfad bezieht, und
    das Einstellen das Einstellen (S304) des Parameters umfasst, der sich auf den mindestens einen Lehrpunkt bezieht, der dem Luftschneidepfad entspricht, ohne den Arbeitspfad zu ändern, als Reaktion auf das Erfassen der Störung in dem Luftschneidepfad.

13. Simulationsprogramm mit Anweisungen, die, wenn das Programm von einem Computer ausgeführt wird, den Computer veranlassen, Folgendes auszuführen

    virtuelles Ausführen (S103) eines Betriebsprogramms mit einem Pfad, der eine Trajektorie eines Roboters (2) darstellt, in einem virtuellen Raum, in dem der Roboter (2) und ein anderes Objekt (9) angeordnet sind;
    Prüfen (S104), ob es eine Störung zwischen dem Roboter (2) und dem anderen Objekt (9) gibt, basierend auf einem Ausführungsergebnis des Betriebsprogramms; und
    Einstellen (S105) eines Parameters, der sich auf mindestens einen Lehrpunkt bezieht, der dem Pfad entspricht, als Reaktion auf das Erfassen der Störung, um die Störung zu beseitigen, wobei das Betriebsprogramm einen Arbeitspfad und einen Luftschneidepfad enthält, wobei der Arbeitspfad auf der Grundlage einer Benutzereingabe eingestellt wird und eine erste Trajektorie des Roboters (2) in einer Aufgabe anzeigt, wobei der Luftschneidepfad automatisch eingestellt wird und eine zweite Trajektorie des Roboters (2) anzeigt, die Aufgaben verbindet, und das virtuelle Ausführen des Betriebsprogramms umfasst:

virtuelles Ausführen (S103) eines einheitlichen Betriebsprogramms, das ein Teil des Betriebsprogramms ist, das sich auf den Luftschneidepfad bezieht; und

als Reaktion darauf, dass keine Störung in dem Luftschneidepfad auftritt, ferner virtuelles Ausführen (S302) eines kontinuierlichen Betriebsprogramms, das ein Teil des Betriebsprogramms ist, das sich auf eine Sequenz des Arbeitspfads und des Luftschneidepfads bezieht, und

das Einstellen das Einstellen (S304) des Parameters umfasst, der sich auf den mindestens einen Lehrpunkt bezieht, der dem Luftschneidepfad entspricht, ohne den Arbeitspfad zu ändern, als Reaktion auf das Erfassen der Störung in dem Luftschneidepfad.

**Revendications**

1. Système de simulation (4) comprenant :

une unité de simulation (102) configurée pour exécuter virtuellement un programme d'opérations incluant un trajet représentant la trajectoire d'un robot (2) sur un espace virtuel dans lequel sont disposés le robot (2) et un autre objet (9), une unité de contrôle d'interférence (102) configurée pour contrôler s'il apparaît une interférence entre le robot (2) et l'autre objet (9) sur la base du résultat d'exécution du programme d'opération, et une unité d'ajustement (103) configurée pour ajuster un paramètre se rapportant à au moins un point d'apprentissage correspondant au trajet en réponse à la détection de l'interférence, dans le but d'éliminer l'interférence, dans lequel le programme d'opérations inclut un trajet de travail et un trajet dans l'air, le trajet de travail étant établi sur la base d'une saisie de l'utilisateur et indiquant une première trajectoire du robot (2) lors d'une tâche, le trajet dans l'air étant établi automatiquement et indiquant une seconde trajectoire du robot (2) établie en liant des tâches, et l'unité de simulation (102) est configurée pour :

exécuter virtuellement un programme d'opérations élémentaires qui fait partie du programme d'opérations qui se rapporte à la trajectoire dans l'air, et exécuter virtuellement un programme d'opérations continues, en réponse à l'absence d'interférence se produisant dans la trajectoire dans l'air, lequel fait partie du programme d'opérations qui se rapporte à une séquence du trajet de travail et du trajet dans l'air, et

l'unité d'ajustement (103) est configurée pour ajuster le paramètre se rapportant à ce ou à ces points d'apprentissage correspondant au trajet dans l'air sans changer le trajet de travail, en réponse à la détection de l'interférence dans le trajet dans l'air.

2. Système de simulation (4) selon la revendication 1, dans lequel :
l'unité d'ajustement (103) est configurée pour :

identifier, lors de l'exécution virtuelle du programme d'opérations élémentaires, une valeur maximale de spirale vers l'intérieur qui représente une valeur de spirale s'enroulant vers l'intérieur d'un point d'apprentissage correspondant au trajet dans l'air et pour laquelle l'interférence n'apparaît pas, et une valeur de réserve de spirale vers l'intérieur qui est plus petite que la valeur maximale de spirale vers l'intérieur et pour laquelle n'apparaît pas d'autre interférence, la valeur de spirale vers l'intérieur étant une valeur numérique indiquant le degré d'une spirale s'enroulant vers l'intérieur de la trajectoire du robot (2) définie par trois points d'apprentissage consécutifs, la spirale vers l'intérieur de la trajectoire du robot (2) étant plus courte qu'un trajet reliant les trois points consécutifs avec des lignes droites, et modifier, lors de l'exécution virtuelle du programme d'opérations continues, la valeur de spirale vers l'intérieur, correspondant au trajet dans l'air, en valeur de réserve de spirale vers l'intérieur dans le cas où le robot (2) interfère avec l'autre objet (9) dans le trajet dans l'air dans lequel est définie la valeur maximale de spirale vers l'intérieur.

3. Système de simulation (4) selon la revendication 1 ou la revendication 2, dans lequel :
l'unité d'ajustement (103) est configurée, en réponse à l'interférence du robot (2) avec l'autre objet (9) au niveau d'une pluralité de positions interférence, pour ajuster le paramètre concernant le ou les points d'apprentissage correspondant à chacune de la pluralité de positions d'interférence.

4. Système de simulation (4) selon l'une quelconque des revendications 1 à 3, dans lequel :

l'ajustement du paramètre, en réponse à la détection de l'interférence, comprend le décalage de la position du ou des points d'apprentissage jusqu'à une position plus à distance de l'autre objet (9) que la position courante.

5. Système de simulation (4) selon la revendication 4, dans lequel :

l'unité d'ajustement (103) est configurée pour décaler la position du ou des points d'apprentissage le long de la direction d'une ligne virtuelle reliant une position d'interférence et la position courante.

6. Système de simulation (4) selon la revendication 5, dans lequel :

l'unité d'ajustement (103) est configurée pour augmenter la valeur de décalage de la position du point d'apprentissage à mesure que diminue la distance entre la position d'interférence et la position courante.

7. Système de simulation (4) selon l'une quelconque des revendications 4 à 6, dans lequel :

l'ajustement du paramètre, en réponse à la détection de l'interférence, comprend le décalage de positions d'une pluralité de points d'apprentissage consécutifs en incluant un premier point d'apprentissage correspondant à une position d'interférence jusqu'à des positions plus éloignées de l'autre objet (9).

8. Système de simulation (4) selon la revendication 7, dans lequel :

la pluralité de points d'apprentissage consécutifs comprend en outre un point d'apprentissage en amont, et où l'unité d'ajustement (103) est configurée pour décaler la position du point d'apprentissage en amont qui est positionné en amont par rapport au premier point apprentissage dans le trajet.

9. Système de simulation (4) selon l'une quelconque des revendications 1 à 8, dans lequel :

l'unité d'ajustement (103) est configurée, en réponse à la détection de l'interférence, pour diminuer la valeur de spirale vers l'intérieur du ou des points d'apprentissage, en tant qu'ajustement du paramètre, la valeur de spirale vers l'intérieur étant une valeur numérique indiquant le degré de spirale s'enroulant vers l'intérieur de la trajectoire du robot (2).

10. Système de simulation (4) selon la revendication 9, dans lequel :

l'unité d'ajustement (103) est configurée pour définir un premier niveau de spirale vers l'intérieur parmi une pluralité de niveaux de spirale vers l'intérieur grâce à un procédé de recherche binaire, de sorte à ce que la valeur de spirale vers l'intérieur diminue, chacun de la pluralité de niveaux de spirale vers l'intérieur représentant un indice incrémental indiquant un candidat de la valeur de spirale vers l'intérieur.

11. Système de simulation (4) selon la revendication 10, dans lequel :

l'unité d'ajustement (103) est configurée pour :

exécuter une ou plusieurs fois, en réponse à la détection de l'interférence, un traitement de décalage de position du ou des points d'apprentissage jusqu'à une position plus éloignée de l'autre objet (9) que la position courante, tout en maintenant le niveau défini de spirale vers l'intérieur, en tant qu'ajustement du paramètre, et définir un autre niveau de spirale vers l'intérieur correspondant à une valeur plus petite de spirale vers l'intérieur, dans le cas où le programme d'opérations est incapable d'éviter l'interférence pour le niveau défini de spirale vers l'intérieur.

12. Procédé de simulation exécuté de simulation (4) comprenant au moins un processeur, le procédé de simulation comprenant :

l'exécution virtuelle (S103) d'un programme d'opérations incluant un trajet représentant la trajectoire d'un robot (2) sur un espace virtuel dans lequel sont disposés le robot (2) et un autre objet (9),
le contrôle (S104) de ce qu'il apparait une interférence entre le robot (2) et l'autre objet (9) sur la base du résultat d'exécution du programme d'opération, et
l'ajustement (S105) d'un paramètre se rapportant à au moins un point d'apprentissage correspondant au trajet en réponse à la détection de l'interférence, dans le but d'éliminer l'interférence,
dans lequel le programme d'opérations inclut un trajet de travail et un trajet dans l'air, le trajet de travail étant établi sur la base d'une saisie de l'utilisateur et indiquant une première trajectoire du robot (2) lors d'une tâche, le trajet dans l'air étant établi automatiquement et indiquant une seconde trajectoire du robot (2) établie en liant des tâches, et
l'exécution virtuelle du programme d'opérations inclut :

l'exécution virtuelle (S103) d'un programme d'opérations élémentaires qui fait partie du programme d'opérations qui se rapporte à la trajectoire dans l'air, et
l'exécution virtuelle (S302) d'un programme d'opérations continues, en réponse à l'absence d'interférence se produisant dans la trajectoire dans l'air, lequel fait partie du programme d'opérations qui se rapporte à une séquence du trajet de travail et du trajet dans l'air, et

l'ajustement inclut l'ajustement (S304) du paramètre se rapportant à ce ou à ces points d'apprentissage correspondant au trajet dans l'air sans changer le trajet de travail, en réponse à la détection de l'interférence dans le trajet dans l'air.

**13.** Programme de simulation comprenant des instructions qui, lorsque le programme est exécuté par un acteur, amènent l'ordinateur à exécuter :

l'exécution virtuelle (S103) d'un programme d'opérations incluant un trajet représentant la trajectoire d'un robot (2) sur un espace virtuel dans lequel sont disposés le robot (2) et un autre objet (9),
le contrôle (S104) de ce qu'il apparait une interférence entre le robot (2) et l'autre objet (9) sur la base du résultat d'exécution du programme d'opération, et
l'ajustement (S105) d'un paramètre se rapportant à au moins un point d'apprentissage correspondant au trajet en réponse à la détection de l'interférence, dans le but d'éliminer l'interférence,
dans lequel le programme d'opérations inclut un trajet de travail et un trajet dans l'air, le trajet de travail étant établi sur la base d'une saisie de l'utilisateur et indiquant une première trajectoire du robot (2) lors d'une tâche, le trajet dans l'air étant établi automatiquement et indiquant une seconde trajectoire du robot (2) établie en liant des tâches, et
l'exécution virtuelle du programme d'opérations inclut :

l'exécution virtuelle (S103) d'un programme d'opérations élémentaires qui fait partie du programme d'opérations qui se rapporte à la trajectoire dans l'air, et
l'exécution virtuelle (S302) d'un programme d'opérations continues, en réponse à l'absence d'interférence se produisant dans la trajectoire dans l'air, lequel fait partie du programme d'opérations qui se rapporte à une séquence du trajet de travail et du trajet dans l'air, et

l'ajustement inclut l'ajustement (S304) du paramètre se rapportant à ce ou à ces points d'apprentissage correspondant au trajet dans l'air sans changer le trajet de travail, en réponse à la détection de l'interférence dans le trajet dans l'air.

**Fig.1**

*Fig.2*

*Fig.3*

PROGRAMMING ASSISTANCE DEVICE — 4

BODY — 10

RECEPTION UNIT — 101

SIMULATION UNIT — 102

ADJUSTMENT UNIT — 103

OUTPUT UNIT — 104

# Fig.4

S1

```
                    START
                       │
                       ▼
┌─────────────────────────────────────────────┐
│  ACQUIRE OPERATION PROGRAM TO BE VERIFIED     │──S101
└─────────────────────────────────────────────┘
                       │
                       ▼
┌─────────────────────────────────────────────┐
│         SELECT PATH TO BE VERIFIED            │──S102
└─────────────────────────────────────────────┘
                       │
                       ▼
┌─────────────────────────────────────────────┐
│     VIRTUALLY EXECUTE OPERATION PROGRAM       │──S103
│         RELATED TO SELECTED PATH              │
└─────────────────────────────────────────────┘
                       │
                       ▼
                  S104
            ◇ INTERFERENCE OCCURS? ◇──NO──┐
                       │ YES               │
                       ▼                   │
                  S105                     │
   ┌──NO──◇ TERMINATE PATH DETERMINATION? ◇│
   │                   │ YES               │
   ▼                   ▼                   │
┌──────────────────┐   ◇ ARE ALL PATHS ◇──NO
│ ADJUST PARAMETER │   ◇   VERIFIED?   ◇  S107
│ RELATED TO       │           │ YES
│ TEACHING POINT   │           ▼
│       S106       │   ┌──────────────────┐
└──────────────────┘   │  OUTPUT RESULT   │──S108
                       └──────────────────┘
                               │
                               ▼
                             END
```

ADJUST PARAMETER RELATED TO TEACHING POINT — S106

INTERFERENCE OCCURS? — S104 — NO / YES

TERMINATE PATH DETERMINATION? — S105 — NO / YES

ARE ALL PATHS VERIFIED? — S107 — NO / YES

OUTPUT RESULT — S108

**Fig.5**

EP 3 827 935 B1

# Fig.6

**Fig.7**

S2

```
                              ( START )
                                  │
                                  ▼
              ┌──────────────────────────────────────┐
              │  SET INITIAL VALUE OF INWARD SPIRAL LEVEL  │──── S201
              └──────────────────────────────────────┘
                                  │
                                  ▼
              ┌──────────────────────────────────────┐
              │  VIRTUALLY EXECUTE OPERATION PROGRAM      │──── S202
              │  IN CASE WHERE TEACHING POINT IS INITIAL POSITION │
              └──────────────────────────────────────┘
                                  │
                                  ▼                     S203
                         ◇ INTERFERENCE OCCURS? ◇ ────── NO ──────┐
                                  │ YES                            │
                                  ▼                                │
              ┌──────────────────────────────────────┐            │
              │  SHIFT POSITION OF TEACHING POINT     │──── S204   │
              └──────────────────────────────────────┘            │
                                  │                                │
           S208                   ▼                                │
  ┌──────────────────┐ ┌──────────────────────────────────────┐   │
  │ FURTHER SHIFT POSITION │  VIRTUALLY EXECUTE OPERATION PROGRAM AGAIN │── S205
  │ OF TEACHING POINT │ └──────────────────────────────────────┘   │
  └──────────────────┘                │                            │
                                      ▼             S206           │
                             ◇ INTERFERENCE OCCURS? ◇ ── NO ──►     │
                                      │ YES                         │
                                      ▼          S207              │
       S210            NO ◇ TERMINATE ADJUSTMENT OF POSITION? ◇    │
  ┌──────────────────┐                │ YES                   S211 │
  │     CHANGE        │                ▼          S209    ┌──────────────────┐
  │ INWARD SPIRAL LEVEL │  NO ◇ TERMINATE ADJUSTMENT OF INWARD SPIRAL │ IDENTIFY RESERVE │
  └──────────────────┘      ◇       LEVEL?        ◇      │ INWARD SPIRAL AMOUNT │
                                      │ YES              └──────────────────┘
                                      ▼
              ┌──────────────────────────────────────┐
              │ DETERMINE PARAMETER RELATED TO TEACHING POINT │── S212
              └──────────────────────────────────────┘
                                      │
                                      ▼
                                  ( END )
```

EP 3 827 935 B1

*Fig.8*

**Fig.9**

S3

START

↓

ACQUIRE CONTINUOUS OPERATION PROGRAM — S301

↓

VIRTUALLY EXECUTE CONTINUOUS OPERATION PROGRAM — S302

↓

S303 — INTERFERENCE OCCURS? — NO

YES

S304 — TERMINATE ADJUSTMENT OF INWARD SPIRAL LEVEL? — NO

S305 — CHANGE INWARD SPIRAL LEVEL PATH IN WHICH INTERFERENCE OCCURS

YES

OUTPUT RESULT — S306

↓

END

EP 3 827 935 B1

**EP 3 827 935 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018143003 A
- US 20170120447 A

- JP 2019171501 B